# EUROPÄISCHE PATENTANMELDUNG

(11) **EP 4 175 266 A1**
(43) Veröffentlichungstag der Anmeldung: **03.05.2023**
(21) Anmeldenummer: 22203286.4
(22) Anmeldetag: 24.10.2022
(51) Int. Cl.: H04M 1/02

(54) **HALTER FÜR EIN MOBILFUNKGERÄT**

(30) Priorität: 27.10.2021 DE 102021127956
(71) Anmelder: Konduoglu, Zekeriya, 58332 Schwelm (DE)
(72) Erfinder: Konduoglu, Zekeriya, 58332 Schwelm (DE)

(57) **Zusammenfassung**

Offenbart ist ein Halter (1) für ein Mobilfunkgerät in Form eines Handys und/oder Smartphones, enthaltend ein flaches, rechteckiges Gehäuse, in das das Mobilfunkgerät einsetzbar ist, und ein an dem Gehäuse (2) befestigtes dehnbares Band (3).

Damit das Mobilfunkgerät von einer Hand im Wesentlichen mittels eines einzigen Fingers festgehalten werden kann, ist erfindungsgemäß zum Einhängen des Bandes ein Befestigungselement (6) vorgesehen, das an der Längsseite des Gehäuses angeordnet ist, die der Längsseite gegenüberliegt, an der das Band befestigt ist. Das Befestigungselement (6) ist als Haken ausgebildet.

## Beschreibung

Die Erfindung betrifft einen Halter für ein Mobilfunkgerät in Form eines Handys und/oder Smartphones, enthaltend ein flaches, rechteckiges Gehäuse, in das das Mobilfunkgerät einsetzbar ist und ein an dem Gehäuse an einer Längsseite des Gehäuses befestigtes dehnbares Band.

DE 20 2013 004 269 U1 offenbart einen solchen Halter. Das Band ist zum Umhängen des Mobilfunkgerätes - hier: eines Tablets - vorgesehen.

In der DE 20 2019 003 167 U1 ist im Hintergrund der Erfindung ein Handyhalter geoffenbart, enthaltend eine Halterung mit doppelseitigen Klebestreifen auf der Rückseite und zwei Erhebungen auf der Vorderseite und Ringen zur Befestigung von Bänden mittels Karabinern oder Schlaufen.

### Aufgabe

Der Erfindung liegt die Aufgabe zugrunde, einen für ein Mobilfunkgerät in Form eines Handys und/oder Smartphones vorgesehenen Halter zu schaffen, mit dem das in das Gehäuse eingesetzte Handy bzw. Smartphone von einer Hand im Wesentlichen mittels eines einzigen Fingers festgehalten werden kann und insbesondere der Daumen zum Betätigen der Tastatur des Mobilfunkgerätes freigehalten ist.

### Lösung

Zur Lösung dieser Aufgabe ist zum Einhängen des Bandes ein Befestigungselement vorgesehen, das an der Längsseite des Gehäuses angeordnet ist, die der Längsseite gegenüberliegt, an der das Band befestigt ist. Das Befestigungselement ist als Haken ausgebildet.

Das Band ist vorzugsweise an einer Längsseite des Gehäuses befestigt, vorzugsweise an einem an dem Gehäuse angebrachten Halterungskörper, der insbesondere zwei Öffnungen zum Durchstecken des Bandes aufweist.

Das Band besteht vorzugsweise aus leuchtfähigem Material, um den Halter auch bei Dunkelheit orten zu können.

### Ausführungsbeispiel

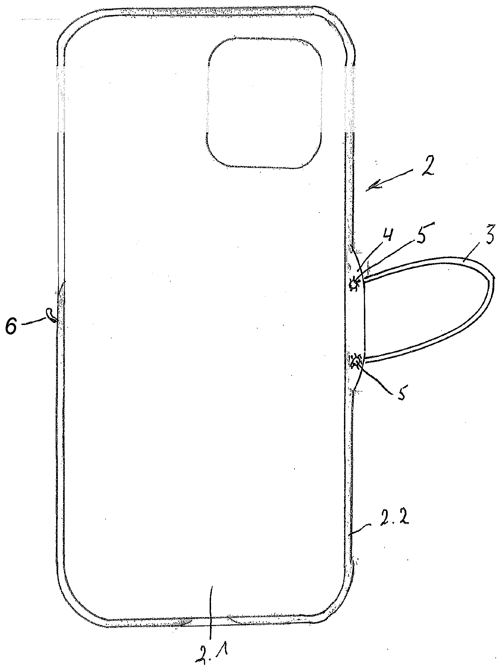

Die Erfindung wird anhand der Zeichnung beschrieben: Der erfindungsgemäße Halter besteht aus einem flachen Gehäuse 2, das eine Platte 2.1 enthält, die teilweise von einem flachen Rand 2.2 versehen ist.

An dem Gehäuse 2 ist ein Halterungskörper 4 angebracht, der zwei Öffnungen 5 zum Durchstecken eines aus dehnbarem Material bestehenden Bandes 3 aufweist.

An der dem Halterungskörper 4 gegenüberliegenden Längsseite des Gehäuses ist ein hakenförmiges Befestigungselement 6 angebracht, in das das dehnungsfähige Band gegen die Rückseite des Gehäuses 1 anliegend eingehängt werden kann, derart, dass zwischen der Gehäuserückwand und dem Band 3 flache, kartenförmige Elemente festgeklemmt werden können.

Das Band 3 besteht vorzugsweise aus leuchtfähigem Material, um das Gehäuse 2, mit dem darin eingesetzten Mobilfunkgerät, auch bei Dunkelheit orten zu können.

In den Figuren sind
- 2: Gehäuse
- 2.1: Platte
- 2.2: Rand
- 3: Band
- 4: Halterungskörper
- 5: Öffnung
- 6: Befestigungselement

## Patentansprüche

1. Halter für ein Mobilfunkgerät in Form eines Handys und/oder Smartphones, enthaltend ein flaches, rechteckiges Gehäuse (2), in das das Mobilfunkgerät einsetzbar ist, und ein an dem Gehäuse (2) an einer Längsseite des Gehäuses (2) befestigtes dehnbares Band (3), **dadurch gekennzeichnet, dass** zum Einhängen des Bandes (3) ein Befestigungselement (6) vorgesehen ist, das als Haken ausgebildet und an der Längsseite des Gehäuses (2) angeordnet ist, die der Längsseite des Gehäuses (2) gegenüberliegt, an der das Band (3) befestigt ist

2. Halter nach dem vorgenannten Anspruch, **gekennzeichnet durch** einen an dem Gehäuse (2) angebrachten Halterungskörper (4), an dem das Band (3) befestigt ist.

3. Halter nach dem vorgenannten Anspruch, **dadurch gekennzeichnet, dass** der Halterungskörper (4) zwei Öffnungen (5) zum Durchstecken des Bandes (3) aufweist.

4. Halter nach einem der vorgenannten Ansprüche, **dadurch gekennzeichnet, dass** das Band (3) aus leuchtfähigem Material besteht.

5. Halter nach einem der vorgenannten Ansprüche, **dadurch gekennzeichnet, dass** das Gehäuse (2) eine Platte (2.1) enthält, die teilweise mit einem flachen Rand (2.2) versehen ist.
